# FASCICULE DE BREVET EUROPEEN

(11) **EP 2 315 526 B1**
(45) Date de publication et mention de la délivrance du brevet: **06.11.2013**
(21) Numéro de dépôt: 09784421.1
(22) Date de dépôt: 23.06.2009
(51) Int. Cl.: A01N 59/00, A01N 37/16, A01N 25/22, A61L 2/18, C02F 1/72, A01P 1/00

(54) **COMPOSITION AQUEUSE BIOCIDE À BASE DE PEROXYDE D'HYDROGÈNE, PROCÉDÉ DE FABRICATION ET UTILISATION**
WÄSSRIGE BIOZIDE ZUSAMMENSETZUNG BASIEREND AUF WASSERSTOFFPEROXID, HERSTELLUNGSMETHODE UND VERWENDUNG
AQUEOUS BIOCIDAL COMPOSITION BASED ON HYDROGEN PEROXIDE, PROCESS FOR PREPARATION THEREOF AND USE

(30) Priorité: 26.06.2008 FR 0854301
(43) Date de publication de la demande: 04.05.2011
(73) Titulaire: Orbeco, Inc., San Francisco, California 94108-1021 (US)
(72) Inventeur: WILMOTTE, Rémi, 51140 Chalons Sur Vesle (FR)
(74) Mandataire: Denjean, Eric
(86) Numéro de dépôt international: PCT/FR2009/051196
(87) Numéro de publication internationale: WO 2010/004161

(56) Documents cités:
- EP-B1- 1 175 149
- WO-A1-96/18301
- WO-A1-97/31093
- US-A- 5 521 056

## Description

L'invention a pour objet une composition aqueuse biocide, à base de peroxyde d'hydrogène (H₂O₂) et d'un mélange acide carboxylique / peracide carboxylique du type RCO₂H/RCO₃H. Elle concerne également un procédé de fabrication de ladite composition, de même que son utilisation dans le domaine de la désinfection, de l'hygiène et/ou de la dépollution, d'une part, et dans le domaine du traitement de surface (en particulier le nettoyage, le décapage et/ou la passivation), d'autre part.

Les solutions désinfectantes contenant le mélange H₂O₂/RCO₂H/RCO₃H ont à la fois un pouvoir oxydant et un pouvoir réducteur et peuvent subir une dismutation du peroxyde d'hydrogène selon la réaction suivante : H₂O₂ → O₂ + H₂O. Cette réaction, thermodynamiquement possible est lente (plusieurs jours). C'est la raison pour laquelle le peroxyde d'hydrogène est commercialement disponible sous forme stabilisée avec de l'acide phosphorique, des pyrophosphates, acides pyridine carboxyliques, sels de Sn⁴⁺. Pour accélérer la cinétique de réaction il est indispensable de catalyser la réaction. Cette catalyse est illustrée par la réaction connue dite de Fenton :

(1) H₂O₂+Fe²⁺→OH⁻ + Fe³⁺ + OH

En présence de catalyseur, la réaction de dismutation du peroxyde d'hydrogène est instantanée et sa réduction entraîne la formation de l'ion hydroxyle, l'un des états les plus oxydants de l'oxygène.

Le document US 5 521 056 décrit une composition de blanchiment utilisée dans le domaine de la photographie couleur. La composition contient essentiellement un peracide ainsi qu'un complexe ternaire constitué d'ions ferriques, d'un ligand polydentate et d'un ligand carboxylate. L'exemple 12 montre l'effet limité sur l'amélioration du taux de blanchiment d'une composition contenant du peroxyde d'hydrogène et un complexe EDTA non biodégradable/nitrate férrique au regard d'une même composition contenant en plus, de l'acide pyridinedicarboxylique constituant le complexe ternaire.

Le document EP 1 175 149 B9 décrit une composition désinfectante comprenant, en tant que catalyseur, des ions de métaux de transition avec leurs différentes valences. Les compositions décrites contiennent des agents stabilisant le peroxyde d'hydrogène permettant de limiter la dégradation lente de H₂O₂ au contact des ions calcium de l'eau. Les agents stabilisants utilisés sont soit l'acide phosphorique, soit l'acide pyridine carboxylique, en fonction de la nature de l'ion métallique. Ces agents stabilisants garantissent effectivement les effets nocifs du calcium de l'eau sur H2O2 mais ne permettent pas d'éviter la dismutation de H₂O₂ provoquée par la présence des ions métalliques. Cela implique donc que, dès que le mélange H₂O₂/RCO₂H/RCO₃H est en contact avec un des éléments cités (sous forme ionisée), il y a décomposition du mélange et production des radicaux libres oxygénés. En d'autres termes, il est impossible de conserver les solutions désinfectantes et les solutions ne peuvent être utilisées qu'après mélange extemporané avec les catalyseurs, ce qui rend leur utilisation extrêmement complexe et leur transport difficile. C'est ce que confirment les exemples de réalisation divulgués dans ce document montrant l'effet désinfectant meilleur de compositions contenant des ions Ag²⁺, MoO4²⁻, VO₃⁻, VO₂⁺, V⁵⁺ WO₄², au regard de compositions de l'art antérieur contenant Ag⁺, les compositions étant testées immédiatement après fabrication.

En d'autres termes, le problème que se propose de résoudre l'invention est de mettre au point des solutions biocides et biodégradables, à base d'un mélange H₂O₂/RCO₂H/RCO₃H et de catalyseur, qui soient stables dans le temps, c'est-à-dire qui ne conduisent pas à une dismutation du peroxyde d'hydrogène au pH de stockage de la solution compris entre 1 et 8.5.

Pour ce faire, le Demandeur a mis au point des solutions dans lesquelles les ions métalliques sont complexés avec un ligand spécifique de manière stable dans une large plage de pH (comprise entre 1 et 8.5) en fonction du choix du catalyseur, la libération des ions et donc la catalyse de la réaction de dismutation du mélange n'étant déclenchée qu'après destruction ou modification des complexes formés, par dilution de la composition et/ou variation de pH, déterminées en fonction de l'utilisation finale.

Plus précisément, l'invention a pour objet une composition aqueuse oxydante biocide comprenant du peroxyde d'hydrogène (H₂O₂) stabilisé ou non, un mélange RCO₂H/RCO₃H où R est un reste aliphatique en C₁-C₆ à chaîne hydrocarbonée linéaire ou ramifiée, saturée ou insaturée et un catalyseur permettant la dismutation du mélange H₂O₂/RCO₂H/RCO₃H.

La composition se caractérise en ce que le catalyseur est complexé avec au moins un ligand, avantageusement un seul ligand, en l'espèce, l'acide glutamique N,N-diacétique ou un de ses sels.

En pratique, le pKa du ligand a une valeur la plus élevée possible, en pratique, supérieure à 7, avantageusement supérieure à 9.

En d'autres termes l'invention consiste à avoir mis au point une composition dont l'effet désinfectant est déclenché uniquement au moment de l'utilisation, par dilution et ou variation de pH. En effet, d'une manière générale, pour des problèmes liés au risque d'explosion, la composition aqueuse selon l'invention contient une teneur en H₂O₂ qui est inférieure ou égale à 60 % en poids par rapport au poids de ladite composition, avantageusement de l'ordre de 30% en poids. Ainsi la composition est susceptible d'être diluée au moment de l'utilisation, en fonction des applications envisagées comme il sera vu par la suite.

L'opération de dilution entraîne une variation du pKa du couple ligand/catalyseur et une variation du potentiel redox et donc la création d'une série de complexes caractérisés par des constantes de dissociation successives de valeur décroissante. Les complexes formés sont modifiés par dilution selon la loi d'Ostwald libérant ainsi le catalyseur à des degrés d'oxydation croissants en fonction de la valeur du pH de la solution et de la nature dudit catalyseur. Pour un catalyseur donné, la libération du catalyseur permet ainsi d'initier la dismutation du mélange H₂O₂/RCO₂H/RCO₃H dans une plage de pH spécifique.

La constante de dissociation du couple ligand/catalyseur (pKd) au moment du stockage devra donc être la plus élevée possible. En pratique, le pKd du couple ligand/catalyseur dépend dans la plupart des cas de la relation pKa/pH. Selon l'invention, on réduira l'effet de dissociation du pH en ajoutant un excès de ligand.

De manière constante, le pH de la composition avant utilisation c'est-à-dire pendant le stockage est, en pratique, compris entre 1 et 8.5, avantageusement entre 1 et 6. En effet, il est parfaitement connu qu'au-delà de pH 8.5, c'est-à-dire à pH alcalin, le mélange de péroxyde d'hydrogène et d'acide acétique est instable et se décompose immédiatement.

Par ailleurs, plus le potentiel rédox de la composition est élevé et plus l'effet désinfectant est efficace. L'objectif de l'invention est donc de réduire le plus possible le mélange H₂O₂/RCO₂H/RCO₃H au moment de l'utilisation, de sorte à obtenir un degré d'oxydation de l'oxygène le plus élevé possible. Selon l'invention, le potentiel d'oxydoréduction du catalyseur est avantageusement compris entre ± 0.69 V correspondant à la valeur du potentiel rédox du couple O₂/H₂O₂ et ± 2,10 V correspondant à la valeur du potentiel rédox du couple H₂O₂-RCO₂H-RCO₃H/H₂O. De manière générale, dans la mesure où le potentiel redox des complexes formés varie proportionnellement à la stabilité du complexe ligand /ion, il est possible de stabiliser de façon préférentielle un ion à une valence privilégiée en fonction du domaine de prédominance ligand/ion.

Pour ce faire, le catalyseur est soit un métal de transition et/ou un alcalinoterreux issu d'une source L fournissant lesdits ions, soit une huile essentielle.

Lorsqu'il s'agit d'un métal de transition et/ou d'un alcalinoterreux, les ions issus de la source L sont choisis dans le groupe comprenant Ag³⁺, M⁴⁺, Ag⁺, A²⁺, V⁴⁺, C³⁺, Fe³⁺, F²⁺, Au⁺, Cu⁺, C²⁺, Pd²⁺, Pt²⁺, Mn²⁺, Au³⁺, Mn³⁺, Co²⁺, Ni²⁺, Mo³⁺, Mo⁶⁺, Mg²⁺. Bien entendu, les ions peuvent être utilisés seuls ou en mélange. La source L se présente soit sous la forme d'un sel dans lequel le métal de transition est à son degré d'oxydation maximal, soit sous la forme d'un oxyde du métal, si l'oxyde est soluble dans les acides.

Dans un mode de réalisation préféré, les ions complexés sont : le fer et/ou le molybdène et/ou l'argent et/ou le cobalt et/ou le cuivre.

Les ions de charge positive sont adsorbés par la membrane cellulaire des bactéries chargées négativement rendant celle ci perméable : il y a élimination des lipopolysaccharides de la membrane des bactéries Gram négative. Ils réagissent ensuite sur les fonctions sulfhydriles des enzymes entraînant la formation de sulfures métalliques. Les ligands du type chélates en excès par rapport aux ions métalliques potentialisent ces actions.

Les complexes contenant du Molybdène sont particulièrement intéressants car le molybdène joue un grand rôle dans le cycle naturel des éléments: nitrogénase ou ptéridines. Il peut être utilisé seul ou en association avec les autres métaux cités permettant ainsi une plus grande diversité de formulation en fonction des cibles à atteindre. Les complexes formés avec Mo permettent de catalyser les réactions d'oxydation jusqu'à un pH de 8,5. En outre, le Molybdène ne présente, aux doses utilisées, aucune toxicité. Par ailleurs et surtout, le Demandeur a constaté que la présence de molybdène, une fois libéré, conduisait à la production de l'espèce la plus oxydante de l'oxygène, à savoir l'oxygène singulet ¹O₂. Ce mode de réalisation est plus particulièrement décrit dans les exemples.

Lorsque le catalyseur est une huile essentielle, ladite huile est avantageusement choisie dans le groupe comprenant, du potentiel rédox le plus élevé au potentiel rédox le plus faible, Romarin> lavande luisleri > immortelle> cannelle écorce >sauge α >thuyone >citron limo >clou de girofle >origan carva > sarriette >Montana >thym thymol >origan. A titre d'exemple, les huiles esentielles de romarin contenant des composés oxydés de terpène ont un potentiel redox élevé permettant d'engendrer à un pH déterminé la dismutation du mélange H₂O₂/RCO₂H/RCO₃H. De plus, l'αPinène contenu s'oxydant facilement en un acide cétonique (l'acide pinonique), la catalyse à pH voisin de 4 pourra devenir effective. Le potentiel redox de ces huiles essentielles a particulièrement été étudié par le professeur Claude Vincent (traité de Bioelectronique éditions Marco Dutteur 1996).

Selon l'invention, les huiles essentielles sont avantageusement utilisées sous forme émulsionnée dans un tensioactif anionique.

Selon une caractéristique essentielle de l'invention, l'agent chélatant est l'acide glutamique diacétique et ses sels. Avantageusement l'agent chélatant est le GLDA : L-Acide Glutamique, N,N-diacétique acide, sel tétrasodique correspondant au numéro Cas N° 51981-21-6 et présentant la formule suivante :

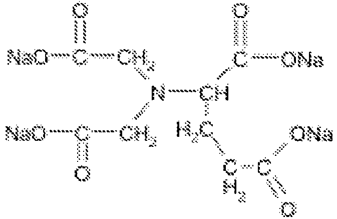

Ce ligand présente l'avantage d'être biodégradable et possède en outre une certaine activité bactéricide sur les bactéries Gram + et Gram -. Par ailleurs, il a une stabilité équivalente à celle de l'EDTA et du NTA : pKa GLDA = 9,4 ; pKa NTA = 9,7 ; pKa EDTA =10,2 dans une très large plage de pH. Les ions mentionnés précédemment peuvent tous être complexés en étant relargués au moment de la dismutation, dans des zones de pH précises et à des dilutions déterminées permettant de réaliser des solutions désinfectantes très stables dans le temps. Les caractéristiques des pKa du GLDA sont les suivantes : pKa¹ : 9,4 ; pKa² : 5,0 ; pKa³ : 3,5 ; pKa⁴ : 2,6. Chacun des complexes formés entre le ligand GLDA et un métal de transition ou le magnésium possède une zone de stabilité propre en fonction du pH, de pH = 1 à pH = 13.

Avantageusement, le complexe catalyseur / ligand est le complexe Mo/GLDA.

Le rapport ligand/catalyseur sera déterminé en fonction de la cinétique de libération souhaitée du catalyseur. Ainsi, le ligand sera en excès par rapport au catalyseur si l'on souhaite retarder la libération du catalyseur dans sa forme la plus oxydée jusqu'à une dilution avancée.

En pratique, le complexe catalyseur/ligand a une concentration comprise entre 1.10⁻⁴ gL⁻¹ et 50.10⁻². gL⁻¹

S'agissant ensuite de l'acide acétique, eu égard à la réaction d'équilibre :

H₂O₂+RCO₂H ⇔ H₂O+RCO₃H

les quantités respectives de RCO₃H et RCO₂H dans le mélange RCO₃H/RCO₂H ne sont pas critiques. Il suffit d'avoir en contact dans H₂O soit H₂O₂ et RCO₃H soit H₂O₂ et RCO₂H pour obtenir un mélange ternaire H₂O₂ + RCO₃H + RCO₂H dès lors que H₂O₂ est en excès par rapport au couple RCO₂H/ RCO₃H. Aussi il suffit en quelque sorte d'incorporer :
- (i) RCO₂H en présence de H₂O₂, ou
- (ii) RCO₃H (qui à l'état concentré contient généralement H₂O₂ et RCO₂H),
dans H₂O, pour obtenir à l'équilibre l'ensemble H₂O₂ + RCO₃H + RCO₂H.

Comme indiqué plus haut, le couple R du couple acide/peracide représente un reste aliphatique en C₁-C₆ à chaîne hydrocarbonée linéaire ou ramifiée, saturée ou insaturée. De façon avantageuse, on fera appel à un groupe R à chaîne hydrocarbonée linéaire saturée telle que CH₃, CH₃CH₂ ou CH₃(CH₂)₄ ou à un groupe R à chaîne hydrocarbonée linéaire insaturée telle que notamment CH₃-CH=CH, CH₃-CH=CH-CH₂ ou CH₃-CH=CH-CH=CH. Les groupes R préférés sont (selon un ordre de préférence croissant) : CH₃-CH=CH-CH=CH, CH₃CH₂ ou CH₃. D'une manière générale, on préfère le couple CH₃CO_{2H}/CH₃CO₂H (i.e. R = méthyle) au couple CH₃CH₂CO₂H/CH₃CH₂CO₃H (i.e. R = éthyle) dès lors que le premier couple est plus actif que le second en tant que moyen désinfectant/dépolluant dans la composition aqueuse selon l'invention. De façon avantageuse, dans la composition aqueuse selon l'invention, le rapport pondéral B/A du mélange RCO₂H/RCO₃H au peroxyde d'hydrogène sera compris entre 0,15/1 et 0,85/1. De préférence, ce rapport pondéral sera compris entre 0,5/1 et 0,7/1.

Par ailleurs, la solution aqueuse est avantageusement constituée d'eau déminéralisée (conductivité ≤ 10 microsiémens).

Pour disposer d'une composition utilisable dans divers domaines, il est nécessaire d'adapter la mouillabilité des solutions aux problèmes rencontrés, en incorporant dans la composition au moins un agent mouillant. A la surface d'un liquide, les forces sont dirigées au coeur du liquide de sorte que la surface libre tend vers un minimum. Les tensioactifs ont pour propriété fondamentale de s'adsorber, en surface aux interfaces des corps en présence. Leur concentration sera donc plus importante sur ces sites privilégiés qu'au sein de la solution. Il en résulte deux types d'effets pouvant intervenir séparément ou simultanément :
- diminution d'une ou plusieurs forces de liaison aux interfaces du système considéré (par exemple eau-huile, huile-métal ou métal- eau),
- adsorption aux interfaces avec une stabilisation de celles-ci.

Ces deux facteurs entraînent un abaissement de la tension superficielle par rapport au milieu liquide.

Les propriétés des tensioactifs étant déterminées par leur structure amphiphile, leur choix comme additif dépendra à la fois de leur comportement dans la solution très oxydante de l'invention et des propriétés superficielles des matériaux, au sens large du terme, sur lesquels la solution est appliquée. Selon l'invention, la composition contient des tensioactifs anioniques, non-ioniques ou amphotères, dans la plupart des cas à usage alimentaire autorisé. Pour toutes les applications liées à la désinfection ou à la stérilisation, les tensioactifs mis en oeuvre sont avantageusement biodégradables.

Dans le cas d'adjonction d'huiles essentielles en tant que catalyseur, les tensio-actifs utilisés présentent en outre des propriétés émulsifiantes.

Avantageusement, l'agent mouillant est le ricinoléate de glycérine 30 fois éthoxylé.

En pratique, le rapport pondéral de l'agent mouillant au peroxyde d'hydrogène est avantageusement compris entre 0,00005/1 et 0,01/1. De façon pratique, ce rapport pondéral sera encore plus avantageusement de l'ordre de 0,005/1.

On peut également additiver la solution avec des produits spécifiques jouant le rôle d'inhibiteur de corrosion : ces produits se déposent directement ou sous forme de divers composés à la surface du métal qui se trouve ainsi protégé contre l'action corrosive du milieu. Les deux mécanismes essentiels de cette protection sont la passivation et l'adsorption. De nombreux inhibiteurs de corrosion sont utilisables sans que la liste soit exhaustive. La plupart agissent par inhibition stérique, limitant la surface de contact entre la solution et le métal à protéger. Parmi les inhibiteurs utilisables on peut citer les polyamines oxydées ou non, le nitrite de dicyclohexamine, le benzotriazole les organophosphates etc.

Lorsque l'on souhaite détruire plus particulièrement les biofilms, la composition de l'invention contient, en tant d'inhibiteur de corrosion préféré, le DMAD : inhibiteur de corrosion à base de diméthylamides d'acides gras insaturés à longue chaîne commercialisé par BUCKMAN. Cet inhibiteur peut être mis en oeuvre dans tous les circuits fermés telles les tours de refroidissement à un dosage de 50 à 300ppm selon les types de corrosion et les biofilms rencontrés.

La composition peut en outre contenir des parfums, tels que par exemple des huiles essentielles ou des essences synthétiques à base nitrile dont les potentiels redox sont en accord avec la composition de base, pour masquer si besoin est, l'odeur de l'acide acétique.

L'invention a également pour objet le procédé de fabrication de la composition précédemment décrite selon lequel :
- on introduit lentement dans une solution aqueuse de H₂O₂ en excès stabilisé ou non, l'acide RCO₂H,
- on laisse reposer la solution résultante obtenue jusqu'à ce que l'équilibre H₂O₂ + RCO₂H ⇔ H₂O+ RCO₃H soit établi,
- on prépare séparément le mélange catalyseur/ligand (GLDA) que l'on introduit ensuite dans la solution H₂O₂ / RCO₂H / RCO₃H,
- on ajuste le pH de façon que le catalyseur complexé reste dans la zone de stabilité du complexe catalyseur/ligand caractérisée par son pKa,
- on complète avec de l'eau déminéralisée pour atteindre la concentration en H₂O₂ souhaitée de la composition.

Selon le procédé, l'H₂O₂ stabilisé ou non a une concentration inférieure à 60 %. Par ailleurs, le mélange avec l'acide RCO₂H est effectué lentement, sous agitation non turbulente, à concentration telle que l'on se trouve en dehors de la zone d'explosivité du mélange. Le cas échéant, on refroidit le mélange. La réaction d'équilibre est atteinte lorsque le potentiel redox est stabilisé, ce potentiel étant fonction du rapport H₂O₂/RCO₂H sachant que le rapport RCO₂H/RCO₃H au peroxyde d'hydrogène est généralement compris entre 0,5/1 et 0,85/1, ce rapport étant fonction de la nature des souches bactériennes à détruire.

Selon une autre caractéristique, lorsque le catalyseur se présente sous la forme d'un ion d'un métal de transition ou un alcalinoterreux, on prépare la solution complexante à partir d'une source L libérant des ions choisis dans le groupe comprenant Ag³⁺, Mn⁴⁺, Ag⁺, Ag²⁺, V⁴⁺, Cr³⁺, F³⁺, Fe²⁺, Au⁺, Cu⁺, Cu²⁺, Pd²⁺, Pt²⁺, Mn²⁺, Au³⁺, Mn³⁺, C²⁺, Ni²⁺, Mo³⁺, M⁶⁺, Mg²⁺ seul ou en mélange. En pratique, on introduit la solution catalyseur + ligand de façon que la concentration par rapport au mélange H₂O₂/RCO₂H/RCO₃H du catalyseur complexé soit comprise entre 1.10⁻⁴ et 50.10⁻².gL⁻¹.

Les utilisations de la composition aqueuse oxydante selon l'invention comprennent notamment la désinfection de l'eau pour la rendre potable, l'hygiène des locaux industriels et des piscines, la stérilisation à froid des instruments chirurgicaux et dentaires, la protection des plantes et des récoltes vis-à-vis des bactéries, moisissures, virus et parasites, la protection des poissons, des crustacés et des coquillages vis-à-vis des algues pathogènes telles que les Euglena, la dépollution des sites miniers, et celles qui ont trait au nettoyage, au décapage et/ou à la passivation des surfaces métalliques (notamment les surfaces en acier ou en aluminium) ou non métalliques (notamment les surfaces en plastique ou céramique, les surfaces en plastique comprenant ici celles des panneaux de revêtement de sols ou de murs qui sont exposés et généralement conçus en PVC, polyacrylate, polycarbonate ou autre). De façon avantageuse la composition destinée à la désinfection et l'hygiène sera obtenue par dilution d'une composition standard de façon à avoir une concentration en H₂O₂ de 1 à 2 % en poids.

De façon également avantageuse la composition destinée à la dépollution des sites miniers aura une teneur en H₂O₂ de 4 à 7,9 % en poids et sera diluée au moment de l'emploi jusqu'à une concentration finale d'utilisation inférieure ou égale à 1/100 (i. e. une teneur finale en H₂O₂ inférieure ou égale à 0,04 % en poids). Dans le domaine du traitement de surface, la composition aura avantageusement une teneur en H₂O₂ comprise entre 1 et 7,9 % en poids et comportera un rapport pondéral C/D inférieur à 1/1 et supérieur à 1/2.

De fait, la composition de l'invention peut être incorporée dans une solution ou autre forme plus complexe utilisée pour les applications ci-avant envisagée. A titre d'exemple, la composition de l'invention peut être incorporée au sein d'un gel pour mains. La même composition peut être incorporée au sein d'une solution désinfectante pour locaux industriels. L'avantage de l'invention est en quelle que sorte d'avoir mis au point un même noyau désinfectant qui puisse être formulé pour différentes applications.

L'invention et les avantages qui en découlent ressortiront bien des exemples qui suivent.

### Préparation de la composition

Le procédé général préconisé comprend les étapes suivantes :
dans une cuve en acier inoxydable type 316L passivé introduire du H₂O₂ stabilisé de concentration inférieure à 60 % ;
1- introduire lentement, sous agitation non turbulente l'acide RCO₂H à concentration telle que l'on se trouve en dehors de la zone d'explosivité du mélange, refroidir si nécessaire ;
2- attendre que la réaction d'équilibre se termine ;
3- préparer la solution complexante à partir d'une source de l'un des métaux cité en y ajoutant un excès de ligand par rapport au catalyseur;
4- introduire la solution ligand +cation complexé de façon que la concentration par rapport au mélange H₂O₂/RCO₂H/RCO₃H du cation complexé soit comprise entre 1.10⁻⁴ et 20.10⁻³gL⁻¹;
5- ajuster le pH de façon que le cation complexé reste dans la zone de stabilité du complexe ;
6- compléter avec de l'eau déminéralisée pour atteindre la concentration voulue de la préparation.

### Exemple 1 : préparation quand la source (S) libère du Fe²⁺:

a - Préparer une solution mère selon la méthode précédente de façon à obtenir à l'équilibre une solution contenant :
   i. H₂O₂ : 300 gL⁻¹
   ii. CH₃COOH : 80 gL⁻¹
   iii. CH₃COOOH 5 gL⁻¹
   Le pH de la solution résultante est ≤ 2,5
b - Préparation de la solution complexée contenant Fe²⁺ :
   o dissoudre 20g de Fe SO₄, 7H₂O dans 1000 mL d'eau déminéralisée
   o complexer le Fe²⁺ par une fois et demi la quantité nécessaire de GLDA.
c - Introduire 1 mL de la solution complexée dans la solution mère ;
d - compléter à 1 litre avec de l'eau déminéralisée.

Aucune réaction de dismutation n'est constatée après le mélange.

Pour éliminer les légionelles d'une tour de refroidissement (Concentration de légionelles constatée : 10⁵ alors que la concentration tolérée est de 10³), après détartrage en milieu acide phosphorique le pH de l'eau de la tour de refroidissement est de 6.

On injecte par pompe doseuse dans le circuit d'alimentation de la tour de refroidissement 3mL/m³ de la solution obtenue en (d). Le Fe²⁺ est libéré de son complexe avec le GLDA par la dilution et l'augmentation de pH , il y a dismutation du H₂O₂ et du CH₃COOOH sous l'action du catalyseur Fe²⁺ et formation de l'ion hydroxyle OH°, très oxydant, qui va détruire les légionelles.

Après 2 heures de contact avec la solution désinfectante, la concentration de légionelles est tombée à 10². Inférieure à la quantité de 10³ tolérée.

### Exemple 2 : préparation quand la source (S) libère du du Mo⁶⁺ et Mo³⁺

a - Préparer une solution mère selon la méthode précédente de façon à obtenir à l'équilibre une solution contenant :
   iv. H₂O₂ : 280 gL
   v. CH₃COOH : 80 gL⁻¹
   vi. CH₃COOOH : 3 gL⁻¹
   Le pH de la solution résultante est ajusté à 5.
b - Préparation de la solution complexée contenant Mo :
   - dissoudre 20 g d'acide molybdique dans 700 mL d'eau déminéralisée ;
   - complexer le Mo par deux fois la quantité nécessaire de ligand GLDA ;
   - compléter à 1000mL avec de l'eau déminéralisée
c- Introduire 2 mL de la solution complexée dans la solution mère
La solution résultante est stable pendant 1 an.
On vérifie l'efficacité de cette solution désinfectante par brumisation selon la norme NFT 72-281 sur les souches suivantes :
- *Pseudomonas aemginosa*
- *Staphylococcus aureus*
- *Streptococcus faecium*
- *Bacillus subtilis*
- *Candida albicans*
- *Penicillium verrucosum var. cyclopium*
*souches auxquelles on ajoute Acinetobacter baumani résitante à de nombreux antibiotiques*

La Norme impose une réduction bactérienne de 10⁵ log.
Après essais, on constate que l'on obtient une réduction bactérienne de 10⁸ log avec une solution résultante diluée à 300/1 et cela avec un temps de contact de seulement 10 minutes (la norme impose un temps de contact inférieur à 12 heures).

De tels résultats ne peuvent être obtenus avec l'oxydation par l'ion hydroxyle OH. L'étude de la solution en cours de réaction a montré qu'il y avait production de l'espèce la plus oxydante de l'oxygène : l'oxygène singulet ¹O₂ (cette espèce a été détectée par HPLC et par sa luminescence propre dans l'infra-rouge à 1268 nm).

L'oxygène singulet s'est formé au cours des réactions suivantes catalysées par l'espèce MoO₄²⁻ libérée du complexe Mo/GLDA par la dilution selon la loi d'Ostwald :

CH₃COOOH + H₂O₂ → CH₃COOH+H₂O+1O₂⁻+3O₂

(1O₂⁻ :Oxygène singulet très oxydant, 3O₂ :triplet de l'oxygène ou molécule d'oxygène peu oxydante).

2H₂O₂ → 2H₂O + 1O₂⁻

Ces réactions d'oxydation ne se produisent que si les réactions sont catalysées par certains métaux de transition à leur degré d'oxydation maximum.

### Exemple 3 : préparation quand la source (S) libère du V⁵⁺

a - Préparation de la solution mère
   i. H₂O₂ : 300 g^{L-1}
      introduire lentement, 100mL par minute
   ii. CH₂COOH : 80 gL⁻¹
      Après réalisation de la réaction d'équilibre (24 H à 30 °C ou
      8 jours à 20 °C il y a formation de
   iii. CH₃COOOH : 5 gL⁻¹
      Le pH de la solution résultante est 2,5
b - Préparation de la solution complexée contenant V⁵⁺
   - dissoudre 35,72 g de V₂O₅ (soit 10 g de V) dans 1000 mL d'eau déminéralisée
   - complexer le V⁵⁺ par 112 g de GLDA (un excès de GLGA est nécessaire pour la stabilité du complexe)
c - Introduire 5 mL de la solution complexée dans la solution mère ;
d - compléter à 1 litre avec de l'eau déminéralisée.
e - ramener le pH à 3

Aucune réaction de dismutation n'est constatée après le mélange dont la stabilité constatée est supérieure à un an.

Pour éliminer les légionelles d'une tour de refroidissement (Concentration de légionelles constatée : 10⁵ alors que la concentration tolérée est de 10³), après détartrage en milieu acide phosphorique le pH de l'eau de la tour de refroidissement est de 6.

On injecte par pompe doseuse dans le circuit d'alimentation de la tour de refroidissement la solution 3mL/m³ de la solution obtenue en (d). Le V⁵⁺ est libéré de son complexe avec le GLDA par la dilution et l'augmentation de pH, il y a dismutation du H₂O₂ et du CH₃COOOH sous l'action du catalyseur V⁵⁺ et formation de oxygène singulet (le plus réactif des oxydants), qui va détruire les légionelles. Après 2 heures de contact avec la solution désinfectante, la concentration de légionelles est tombée à 10. Inférieure à la quantité de 10³ tolérée.

## Revendications

1. Composition aqueuse oxydante biocide, comprenant du peroxyde d'hydrogène (H₂O₂), un mélange RCO₂H/RCO₃H où R est un reste aliphatique en C₁-C₆ à chaîne hydrocarbonée linéaire ou ramifiée, saturée ou insaturée et un catalyseur permettant la dismutation du mélange H₂O₂/RCO₂H/RCO₃H, **caractérisée en ce que** le catalyseur est complexé avec de l'acide glutamique N,N-diacétique ou un de ses sels.

2. Composition selon la revendication 1, **caractérisé en ce que** le pKa du ligand est supérieur à 7.

3. Composition selon la revendication 1, **caractérisée en ce que** le potentiel d'oxydoréduction du catalyseur est compris entre ± 0.69 V correspondant à la valeur du potentiel rédox du couple O₂/H₂O₂ et ± 2,10 V correspondant à la valeur du potentiel rédox du couple H₂O₂-RCO₂H-RCO₃H/H₂O.

4. Composition selon la revendication 1, **caractérisé en ce que** le catalyseur est un métal de transition ou un alcalinoterreux issu d'une source fournissant des ions choisis dans le groupe comprenant Ag³⁺, Mn⁴⁺, Ag⁺, Ag²⁺, V⁴⁺, Cr³⁺, Fe³⁺, Fe²⁺, Au⁺, Cu⁺, Cu²⁺, Pd²⁺, Pt²⁺, Mn²⁺, Au³⁺, Mn³⁺, Co²⁺, Ni²⁺, Mo³⁺, Mo⁶⁺, Mg²⁺ seul ou en mélange.

5. Composition selon la revendication 4, **caractérisé en ce que** le catalyseur est un métal de transition issu d'une source fournissant des ions choisis dans le groupe comprenant le fer et/ou le molybdène et/ou l'argent et/ou le cobalt et/ou le cuivre.

6. Composition selon la revendication 1, **caractérisée en ce qu'**elle contient un complexe Mo/GLDA en tant que complexe catalyseur / ligand.

7. Composition selon la revendication 1, **caractérisé en ce que** le ligand est le GLDA : L-Acide Glutamique, N,N-diacétique acide, sel tétrasodique.

8. Composition selon la revendication 1, **caractérisée en ce qu'**elle contient en outre du ricinoléate de glycérine 30 fois éthoxylé en tant qu'agent mouillant.

9. Procédé de fabrication de la composition objet de la revendication 1 selon lequel :
- on introduit lentement dans une solution aqueuse de H₂O₂ en excès stabilisé ou non, l'acide RCO₂H,
- on laisse reposer la solution résultante obtenue jusqu'à ce que l'équilibre H₂O₂ + RCO₂H H₂O+ RCO₃H soit établi,
- on prépare séparément le mélange catalyseur/ligand que l'on introduit ensuite dans la solution H₂O₂ / RCO₂H / RCO₃H,
- on ajuste le pH de façon que le catalyseur complexé reste dans la zone de stabilité du complexe catalyseur/ligand **caractérisée par** son pKa,
- on complète avec de l'eau déminéralisée pour atteindre la concentration en H₂O₂ souhaitée de la composition.

10. Procédé selon la revendication 9, **caractérisé en ce qu'**on introduit la solution catalyseur + ligand de façon que la concentration par rapport au mélange H₂O₂/RCO₂H/RCO₃H du catalyseur complexé soit comprise entre 1.10⁻⁴ et 50.10⁻².gL⁻¹.

## Patentansprüche

1. Oxidierende wässrige Biozid-Zusammensetzung, umfassend Wasserstoffperoxid (H₂O₂), ein Gemisch RCO₂H/RCO₃H, worin R ein aliphatischer Rest in C₁-C₆ mit geradkettiger oder verzweigter, gesättigter oder ungesättigter Kohlenwasserstoffkette ist, und einen Katalysator, der die Dismutation des Gemischs H₂O₂/RCO₂H/RCO₃H ermöglicht, **dadurch gekennzeichnet, dass** der Katalysator mit Glutaminsäure-N,N-diessigsäure oder einem ihrer Salze komplexiert ist.

2. Zusammensetzung nach Anspruch 1, **dadurch gekennzeichnet, dass** der pKa-Wert des Liganden über 7 beträgt.

3. Zusammensetzung nach Anspruch 1, **dadurch gekennzeichnet, dass** das RedoxPotential des Katalysators zwischen ±0,69 V, was dem Wert des Redox-Potentials des Paars O₂/H₂O₂ entspricht, und ±2,10 V beträgt, was dem Wert des Redox-Potentials des Paars H₂O₂-RCO₂H-RCO₃H/H₂O entspricht.

4. Zusammensetzung nach Anspruch 1, **dadurch gekennzeichnet, dass** der Katalysator ein Übergangsmetall oder ein Erdalkali ist, das aus einer Quelle stammt, die Ionen liefert, die aus der Gruppe ausgewählt sind, die Ag³⁺, Mn⁴⁺, Ag⁺, Ag²⁺, V⁴⁺, Cr³⁺, Fe³⁺, Fe²⁺, Au⁺, Cu⁺, Cu²⁺, Pd²⁺, Pt²⁺, Mn²⁺, Au³⁺, Mn³⁺, Co²⁺, Ni²⁺, Mo³⁺, Mo⁶⁺, Mg²⁺ allein oder im Gemisch umfasst.

5. Zusammensetzung nach Anspruch 4, **dadurch gekennzeichnet, dass** der Katalysator ein Übergangsmetall ist, das aus einer Quelle stammt, die Ionen liefert, die aus der Gruppe ausgewählt sind, die Eisen und/oder Molybdän und/oder Silber und/oder Kobalt und/oder Kupfer umfasst.

6. Zusammensetzung nach Anspruch 1, **dadurch gekennzeichnet, dass** sie einen Mo/GLDA-Komplex als Katalysator/Ligand-Komplex enthält.

7. Zusammensetzung nach Anspruch 1, **dadurch gekennzeichnet, dass** der Ligand GLDA: L-Glutaminsäure-N,N-diessigsäure, Tetranatriumsalz ist.

8. Zusammensetzung nach Anspruch 1, **dadurch gekennzeichnet, dass** sie darüber hinaus 30-fach ethoxyliertes Glycerinricinoleat als Benetzungsmittel enthält.

9. Verfahren zur Herstellung der den Gegenstand von Anspruch 1 bildenden Zusammensetzung, gemäß dem:
- man in eine wässrige, im Überschuss stabilisiert order nicht, H₂O₂-Lösung die Säure RCO₂H langsam einbringt,
- man die erhaltene, sich ergebende Lösung ruhen lässt, bis sich das Gleichgewicht H₂O₂ + RCO₂H H₂O + RCO₃H eingestellt hat,
- man das Gemisch Katalysator/Ligand getrennt vorbereitet, das dann in die Lösung H₂O₂/RCO₂H/RCO₃H eingebracht wird,
- man den pH-Wert so einstellt, dass der komplexierte Katalysator in dem durch seinen pKa charakterisierten Stabilitätsbereich des Katalysator/Ligand- Komplexes bleibt,
- man mit demineralisiertem Wasser auffüllt, um die in der Zusammensetzung gewünschte H₂O₂-Konzentration zu erreichen.

10. Verfahren nach Anspruch 9, **dadurch gekennzeichnet, dass** man die Lösung aus Katalysator + Ligand so einbringt, dass die Konzentration in Bezug auf das Gemisch H₂O₂/RCO₂H/RCO₃H des komplexierten Katalysators zwischen 1.10⁻⁴ und 50.10⁻² .gL⁻¹ beträgt.

## Claims

1. An aqueous biocidal composition, comprising hydrogen peroxide (H₂O₂), a RCO₂H/RCO₃H mixture where R is a C₁-C₆ aliphatic residue with a saturated or unsaturated straight or branched hydrocarbon chain and a catalyst allowing the dismutation of the H₂O₂/RCO₂H/RCO₃H mixture, **characterized in that** the catalyst is complexed with glutamic acid N,N-diacetic acid or a salt thereof.

2. The composition of claim 1, **characterized in that** the pKa of the ligand is greater than 7.

3. The composition of claim 1, **characterized in that** the redox potential of the catalyst ranges between ±0.69 V corresponding to the value of the redox potential of couple O₂/H₂O and ±2.10 V corresponding to the value of the redox potential of the H₂O₂-RCO₂H-RCO₃H/H₂O couple.

4. The composition of claim 1, **characterized in that** the catalyst is a transition metal or an alkaline earth originating from a source providing ions selected from the group comprising Ag³⁺, Mn⁴⁺, Ag⁺, Ag²⁺, B⁴⁺, Cr³⁺, Fe³⁺, Fe²⁺, Au⁺, Cu⁺, Cu²⁺, Pd²⁺, Pt²⁺, Mn²⁺, Au³⁺, Mn³⁺, Co2⁺, Ni²⁺, Mo³⁺, Mo⁶⁺, Mg²⁺ alone or in a mixture.

5. The composition of claim 4, **characterized in that** the catalyst is a transition metal originating from a source providing ions selected from the group comprising iron and/or molybdenum and/or silver and/or cobalt and/or copper.

6. The composition of claim 1, **characterized in that** it contains a Mo/GLDA complex as a catalyst/ligand complex.

7. The composition of claim 1, **characterized in that** the ligand is GLDA: L-Glutamic Acid, N,N-diacetic acid, tetrasodium salt.

8. The composition of claim 1, **characterized in that** it further contains 30-times ethoxylated glycerol ricinoleate as a wetting agent.

9. A method for manufacturing the composition of claim 1, wherein:
- the RCO₂H acid is slowly introduced into an aqueous solution of H₂O₂ in excess, stabilized or not,
- the obtained resulting solution is left to rest until the H₂O₂ + RCO₂H H₂O₂ + RCO₃H equilibrium is established,
- the catalyst/ligand mixture is prepared separately and then introduced into the H₂O₂/RCO₂H/RCO₃H solution,
- the pH is adjusted so that the complexed catalyst remains in the stability area of the catalyst/ligand complex **characterized by** its pKa,
- the solution is complemented with demineralized water to reach the desired H₂O₂ concentration of the composition.

10. The method of claim 9, **characterized in that** the catalyst + ligand solution is introduced so that the concentration with respect to the H₂O₂/RCO₂H/RCO₃H mixture of the complexed catalyst ranges between 1.10⁻⁴ and 50.10⁻² gL⁻¹.
